# EUROPEAN PATENT SPECIFICATION

(11) **EP 1 348 265 B1**
(45) Date of publication and mention of the grant of the patent: **31.12.2008**
(21) Application number: 01901225.1
(22) Date of filing: 04.01.2001
(51) Int. Cl.: H04B 10/00, H04J 14/02, H04L 12/56

(54) **MAINTAINING QUALITY OF PACKET TRAFFIC IN OPTICAL NETWORK WHEN A FAILURE OF AN OPTICAL LINK OCCURS**
AUFRECHTERHALTUNG DER PAKETVERKEHRSQUALITÄT IN EINEM OPTISCHEN NETZWERK, WENN EIN AUSFALL EINER OPTISCHEN VERBINDUNG AUFTRITT
MAINTIEN DE LA QUALITE DU TRAFIC DE PAQUETS DANS UN RESEAU OPTIQUE EN CAS DE PANNE D'UNE LIAISON OPTIQUE

(43) Date of publication of application: 01.10.2003
(73) Proprietor: Schofield Technologies LLC, Wilmington, New Castle DE 19801 (US)
(72) Inventor: OKSANEN, Markku, FIN-00940 Helsinki (FI); PIETILÄINEN, Antti, FIN-02240 Espoo (FI); BROWN, Ronald, FIN-00980 Helsinki (FI); GRÖHN, Aki, FIN-02340 Espoo (FI); JUVONEN, Reijo, FIN-02740 Espoo (FI); KAAJA, Harald, FIN-00180 Helsinki (FI); TERVONEN, Ari, FIN-01260 Vantaa (FI)
(74) Representative: Ruuskanen, Juha-Pekka
(86) International application number: PCT/FI2001/000012
(87) International publication number: WO 2002/054629

(56) References cited:
- EP-A1- 0 928 082
- WO-A1-01/15352
- WO-A1-99/18679

## Description

### FIELD OF THE INVENTION

The invention relates generally to supporting packet traffic in an optical network, especially protecting Internet traffic when a failure of an optical network link occurs.

### BACKGROUND OF THE INVENTION

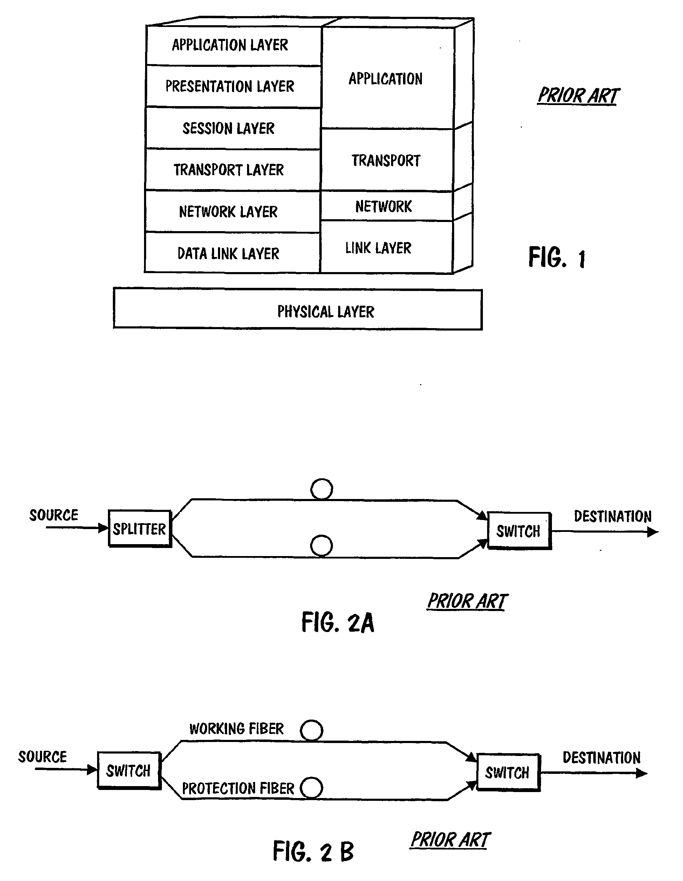

FIG. **1** shows the OSI and TCP/IP communications models. The seven-layer OSI model came from work done by standards committees whereas the four TCP/IP layers, built on top of a hardware layer, came out or practical work done by researches. The session and presentation layer functions defined in by the OSI model are omitted from the TCP/IP model, and the functions are fulfilled as needed by different TCP/IP protocols.

In the TCP/(IP model a user interacts with a network application at the application layer. Data is received as command from the user and as data from the network application on the other end of the connection. TCP/IP applications communicate in client/serve pairs. The transport layer manages the flow of data between two inter-network hosts using TCP (Transmission Control Protocol). At the network layer data is moved around the Internet. Internet Protocol (IP) operates at this layer to route packets across networks independent of the network medium. The data link layer, also known as the network interface layer, serves for transmitting data across a single network. Physical networks consist of several kinds of physical medium: copper lines, optical fibers, radio channels, for example.

The application and transport layers function as end-to-end protocols and the protocols are concerned with communications between the end systems. In contrast, at the data link and network layers, the protocols are concerned with the actual delivery routes that traffic takes. At the network layer, datagrams are addressed to the ultimate source host, but intermediate routers examine the destination address and route the traffic locally in whatever way is necessary.

Local network addressing becomes important at the data link layer, inasmuch as it can be aware of the hardware addresses of hosts only on the same physical wire. Hence, the data link layer shows source and destination addresses of one or more routers.

By assigning different functions to different network layers, it is possible to route traffic across a network (the Internet) that spans the globe. Only the intervening routers need any significant amount of information about the inter-network structure, the hosts need to know only which traffic is local and which is not.

Reliability of TCP transmission is based on use of acknowledgments of receipt, requests of retransmission and use of timeouts. IP transmission does not offer any guarantee for transmission rate, bandwidth, delay, and throughput. In other words, IP protocol does not provide any quality-of-service guarantees unlike another widely used protocol, the asynchronous transfer mode (ATM).

As stated previously, internet protocol (IP) operates at the network layer to route packets across networks independent of the network medium and the data link layer serves for transmitting data across a single network that can consist of several kinds of physical medium.

High speed networks, such as SONET (Synchronous Optical Network) and SDH (Synchronous Digital Hierarchy) use fiber as the physical transmission medium. Today optical networks, being a part of public telecommunication infrastructure, convey a remarkable part of Internet traffic.

Next, protection of an optical network against fiber cuts is shortly explained. The basic principle in optical protection is to arrange a reserve path for traffic. The reserve path means another fiber and another route. Two fundamental protection concepts are used for simple point-to-point links: 1+1 protection and 1:1 protection.

FIG. **2A** depicts 1+1 protection, where traffic is transmitted simultaneously on two separate fibers from the source to the destination. One fiber is the working fiber and the other is the protection fiber, wherein the splitter transmits the same data to both of the fibers. Thus, in 1+1 protection, there are two fibers from the source to the destination and traffic is transmitted simultaneously on two separate fibers. The switch selects one of the two fibers for reception. If the working fiber is cut, the destination switches over to the protection fiber and continues to receive data. The switching time is very fast, around 2 ms.

FIG. **2B** depicts 1:1 protection. Traffic form the source is transmitted over only one fiber at a time, i.e. over the working fiber. In normal operation another fiber, i.e. the protection fiber, is "cold"; no data is transferred. In an unidirectional communication system a fiber cut is detected by the destination and not the source. Thus, if working fiber fails, the destination detects it, whereupon an optical switch switches over to the protection fiber. Then the destination must tell the source, using a signaling protocol, to switch over to the protection fiber. In bi-directional communication, a fiber cut will be detected by both the source and the destination. In the 1:1 protection optical switches at both ends of the link are required. Switching time is clearly larger than in 1+1 protection.

IP-routers take care of routing IP-packets in the Internet. Routers forward network traffic from one connected network to another. Further, the networks can be optical networks and, in addition, there might be several intermittent optical networks there between. What complicates matters in using IP-routers to route IP-packets through an optical network is that the IP-network and the optical network consist of many layers. Each layer in both networks has its own protection. Moreover, there is no interworking between the protection mechanism of the optical network and the network layer of the Internet. Thus, the network layer, at which the Internet Protocol (IP) operates, is fully independent of the optical layer of the optical network and, correspondingly, of protection of a fiber.

A drawback of the above-described features is that IP-routers have no way of knowing how the optical transport layer is set up, i.e. the IP layer is quite unaware of the optical routes between nodes. Accordingly, when arranging optical protection against fiber cuts no attention is paid to the nature of traffic being transmitted over the optical network. The drawback will be more apparent in connection with the quality of service (QoS) that is being specified for Internet transmission. In prior art, the Internet protocol (IP) sees the optical layer as a simple point-to-point connection without capacity usage optimized to match QoS levels of the Internet protocol (IP). On the other hand, the optical layer does not support the QoS of the Internet Protocol.

A prior art method to maintain traffic quality in optical networks is known from WO-A-9918679 and EP-A-0 928 082.

An objective of the present invention is to devise a method that makes possible the interworking of optical protection and IP-layer protection in order to support QoS routing and IP-packet forwarding.

According to the present invention, there is provided a method according to claim 1, a router according to 10, and an optical network according to claim 11. Embodiments are defined in claims 2 to 9 and 12 to 16.

In one embodiment, the objective is achieved by configuring optical point-to-point links to form a part of a ring network and by arranging different protection types for different links. By using 1+1 protection or 1:1 protection for each of the optical links in a ring network, each optical link can be provided with an appropriate protection level corresponding to the nature of the Internet traffic being transmitted over the link.

A high protection level for a link guarantees almost uninterrupted transmission of the Internet traffic, despite a link failure caused by a fiber cut, at the same bit rate as prior to the failure. This protection level is achieved with 1+1 protection. The optical layer can offer this protection for high priority Internet traffic that does not tolerate delay.

A middle protection level for a link guarantees transmission of the Internet traffic at the same bit rate as prior to the failure; despite link failure caused by fiber cut, but after a short interruption period. Optical layer can offer this protection for high priority Internet traffic tolerating some delay. This protection level is achieved with 1:1 protection.

The main difference between the high and middle protection levels is in their response times to failures.

A low protection level for a link does not guarantee uninterrupted transmission of the Internet traffic in case of a link failure caused by a fiber cut. Hence, no protection is offered in the optical layer. When the Internet traffic is dropped, the IP- layer will soon detect the missing link and, in consequence of this, will change routing tables to accommodate to the new situation. The Internet traffic that used the missing link will be restored if the rest of the network is not congested.

In the middle protection level optical signaling at the optical layer takes care of protection wherein the IP-layer does not know when protection actions are carried out.

The protection levels at the optical layer may have corresponding priority levels in the IP-layer.

### BRIEF DESCRIPTION OF THE DRAWINGS

The invention will now be described in more detail with reference to the accompanying drawings, in which
- FIG. **1**: depicts the layer model of TCP/IP protocol;
- FIG. **2A**: shows 1+1 protection of an optical link;
- FIG. **2B**: shows 1:1 protection of an optical link;
- FIG. **3**: illustrates an optical ring network;
- FIG. **4**: depicts arrangement as seen from the IP-layer's point of view, and
- FIG. **5**: shows1:N protection of an optical link.

### DETAILED DESCRIPTION OF THE PREFERRED EMBODIMENT

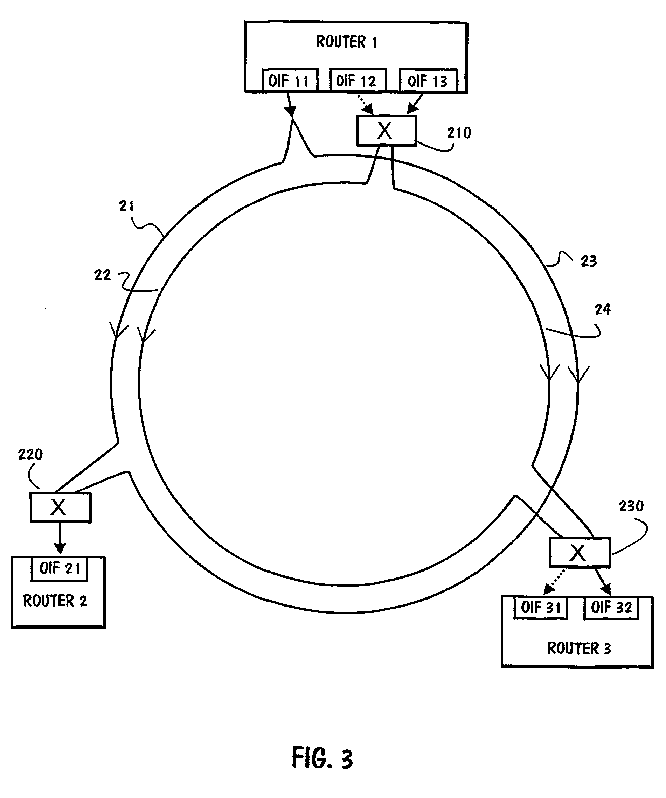

FIG. **3** illustrates a ring network comprising optical fibers as the physical medium. The network is comprised of two optical rings and three routers connected to the rings via optical interfaces (OIF). Rings offer a high degree of availability in the presence of failures while being topologically simple. Although links can fail because of fiber cut and nodes may fail because of power outages or equipment failures, the ring network is resilient to failures because it provides at least two separate paths between any pair of nodes. The paths do not have any nodes or links in common, expect the source and destination nodes.

Referring to FIG. **3****,** traffic between routers **1** and **2** is 1+1 protected: fiber **21** is the working fiber and fiber **23** is the protection fiber. Parallel fibers having traffic to same direction can be replaced by a single fiber that can carry multiple optical channels. Wavelength division multiplex (WDM) technology, for example, can be used for this purpose, wherein wavelengths are added into and removed from the fibers by using WDM multiplexers and demultiplexers, respectively. Traffic between routers **1** and **2** as well as traffic between routers **1** and **3** are bi-directional. For simplicity, only the directions of traffic from router **1** to routers **2** and **3** are considered hereafter.

Router **1** has interface OIF11 for transmitting data to router **2,** and, accordingly, router **2** has interface OIF21 for receiving data from router **1.** Switch **220** monitors optical power from fiber **21** and if the optical power disappears due to a fiber cut, optical switch **220** simply switches over to fiber **23** and continues to receive data. The switching time is very short; around 2 ms. Only one optical interface is required at both ends. For example, if total capacity of the fibers between router1 and router 2 is 2,5 Gbit/s, then instead of offering a maximum capacity of 5 Mbit/s for traffic between routers 1 and 2, only 2,5 Gbit/s can be offered. On the other hand, due to 1+1 protection this capacity is available not only in normal operating conditions, but also during a fiber failure when active protection takes place.

This protection offers high protection level for Internet traffic. In most cases switching over to the reserve fiber is so fast that the IP layer is not at all aware that a failure has occurred in the optical layer. Hence, a point-to-point connection that is 1+1 protected can be offered for clients whose Internet traffic requires extremely reliable connections.

Middle and low protection levels can be offered to traffic between routers **1** and **3.** There are two optical interfaces in routers **1** and **3:** router **1** has interfaces OIF12 and OIF 13 for transmitting data, and, accordingly, router **3** has interfaces OIF31 and OIF 32 receiving data from router **1.** As in the previous example, there is also traffic form router **3** to router **1,** but traffic is not shown in the figure. Hence, there are two optical links between routers 1 and 3. If capacity of each of the links between router1 and router 3 is 2,5 Gbit/s, then the maximum capacity available between the routers is 5 Gbit/s, wherein both fibers are used for the traffic. In that case, a load sharing principle is used in the transmitting router for sharing traffic between optical interfaces OIF 12 and OIF 13.

According to the invention, traffic between router **1** and router **3** is 1:1 protected. According to 1:1 protection scheme, fiber **24** of this link is chosen as the "working fiber" whereas fiber **22** is the "protection fiber". It should be noted that either of the fibers could be chosen as working fiber. For example, traffic that router **1** transmits via optical interface **12** and optical switch **210** to fiber **24** is protected, whereupon router **3** is always capable to receive that traffic either from fiber **24** via optical switch **230** and optical interface **32** or fiber **22** via optical switch **230** and optical interface **31.**

However, in contrast to the basic principle of 1+1 protection where the protection fiber is "cold", in normal operation traffic is also conveyed via protection fiber **22.** Thus, IP-router 1 sends packets through optical interface OIF 13 and optical switch **210** to fiber **24.** Packets having low priority are routed through optical interface OIF 12 and optical switch 210 to fiber **22.** The same bit rate is offered to all packets being transferred between router 1 and router 3 despite the priority class of the packets.

If a fiber cut takes place in fiber **24,** the protection operation according to a 1:1 scheme will be performed. Optical switch **230** detects that no packets, i.e. no light is arriving from fiber **24,** whereupon switch **230** switches so that it routes packets from fiber **22** to optical interface **32** and from fiber **24** to optical interface **31.** Simultaneously switch **230** informs switch **210** about the switch change, using a signaling protocol, whereupon switch **210** turns to guide packets from optical interface **13** to fiber **22** and from optical interface **12** to fiber **24.**

As a result, packets of middle priority are still delivered from router **1** to router 3 but after a short interruption and via another fiber as prior to the fault. Packets having low priority are directed to the broken fiber **24** and therefore these packets are lost.

In the protection scheme described above, packets having low priority are transmitted at the same bit rate as packets having middle priority, but in a fault situation middle-priority traffic survives and low-priority traffic is interrupted. Hence, low-priority traffic always suffers the risk of being dropped.

If a fiber cut takes place in fiber **22,** then optical switches **210** and **230** do not change their positions. As a result, middle-priority traffic via fiber 24 survives but low-priority traffic via fiber **22** is interrupted.

In summary, middle priority packets can always be transmitted between router 1 and router 2, despite a fiber cut occurring in whichever of the links.

The router makes decisions on which packets are routed to which optical interface. The decisions are made without knowledge of the underlying optical network. In any case, the operator of the optical network arranges the optical network and protection of the fibers beforehand and configures the routers in an appropriate way so that routers route certain traffic to a certain fiber offering a certain priority level taking into account the requirements of the traffic considered.

Classification of traffic into priority classes can be performed by destinations and/or origins of IP-packets, for example. After classification has been done, protection types between appropriate nodes will be chosen and the links will be configured accordingly. Then routers direct packets into the proper optical interfaces and further to proper optical fibers. However, configuration of the optical links in a ring network is rather static and configuration that has been set is changed seldom. In any case, the router decides how traffic is directed to the fibers.

It is worth noting that the invention combines protection in the IP-layer and protection in the optical layer, although those layers are fully independent of each other. Despite the fact that there is not any control signal flow between the optical layer and the IP- layer, the quality of Internet traffic between nodes is maintained. The current Internet protocol supports both 1+1 and 1:1 protection schemes.

The optical protection switching according to the present invention is particularly suitable for the Internet with emerging Quality of Service (QoS) Routing that is being developed. In QoS routing links between routers are associated with QoS parameters. Routing tables are created separately for different transport classes.

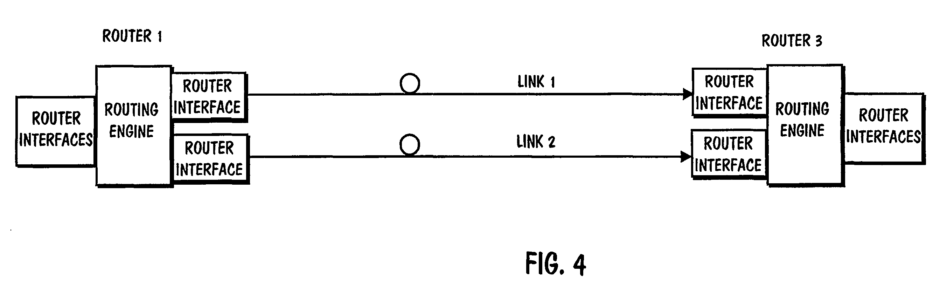

This will be explained in more detail with reference to FIG. **4** and FIG. **3****.**

FIG. **4** shows routers **1** and **3** of FIG. **3** and the links there between. Moreover, the figure shows arrangement as seen from the IP-layer's point of view. Link **1** corresponds to fiber **24** and link **2** corresponds to fiber **22.** Traffic from router **1** to router **3** is considered. Router **1** checks the QoS parameters of the incoming IP-packets. If the parameters indicate that the packets require high reliability and low delay, then the packets are routed via link **1.** This route is depicted as solid line arrows in FIG. **3****.** Other packets, i.e. the packets whose QoS parameters indicate that the packets tolerate more delay and have low reliability requirements, are routed via link **2.** This route is indicated with dashed line arrows in FIG. **3****.** A higher price might be charged for packets traversing link **1** than packets traversing link **2** because of the higher QoS of link **1..**

If a fiber brake occurs in link **2,** the link is removed for the duration of the repair time. Protection at the IP layer will happen and IP connections are restored in a few seconds, if the IP network is not overloaded. Link**1** suffers only a very short break, if any, and the fault triggers no protection at the IP layer.

At the IP layer three different approaches may be used; a load sharing scheme, a modified QoS packet forwarding scheme, and a QoS routing scheme.

A load sharing scheme is used in present routers but this scheme does not take advantage of the knowledge that link **1** survives and link 2 does not survive after a fiber cut.

In the modified QoS packet forwarding scheme, instead of dropping lower priority packets conveyed via link **1,** the packets are directed into link **2,** if link **1** threatens to become congested.

In the QoS routing scheme the links have different routing parameters as already described earlier.

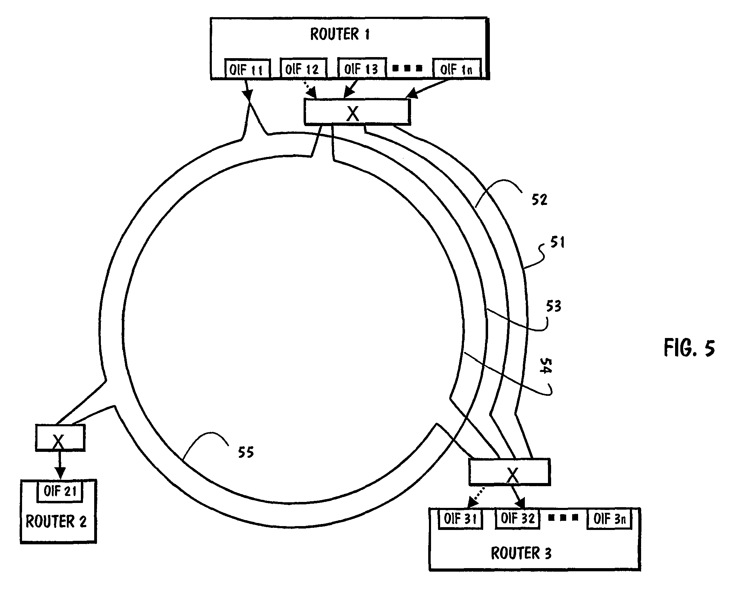

FIG. 5 depicts an optical network allowing five priority levels. The figure differs from FIG.3 in that in the ring there are four optical fibers between router **1** and router 3. Of course, the number of additional links between routers is not limited to five but any number N of fibers can be used. Then, the protection scheme is known as 1:N. In 1:N protection schemes, N working fibers share a single protection fiber, wherein protection can handle the failure in any of the single working fibers. Therefore, fibers **51, 52,**and **54** can each transmit high priority traffic between routers **1** and **3,** and fiber **55** carries low-priority traffic. If a fiber cut occurs in any of fibers **51-54,** its traffic is routed to fiber **55** and the low-priority traffic of that fiber **55** is dropped.

Accordingly, a different priority level can be specified for each of the fibers **51-54.** If a fiber cut occurs, let's say in fiber **52** carrying traffic of highest priority, the traffic will be routed to fiber **55** whose traffic will be dropped. If thereafter a failure occurs in fiber **51,** its traffic will be routed to fiber **53** having lower priority and not to fiber **55** because it is conveying traffic having higher priority than that of fiber **51.** In addition, total capacity of the router output can be divided between each of the optical interfaces OIF12...OIFN and OIF32...OIFN. Typical capacity of an optical interface today is 2,5 Gbit/s. Then traffic with the rate of 10 Gbit/s can be shared between five links **51-55.**

If a 1:N protection scheme is used, then same number of priority levels may be required in the IP-world.

The invention is applicable in a ring network, especially in Metropolitan-Area Networks (MAN) and SONET/SDH networks.

The proposed method is suitable in billing a client, for example. Then charging can be based on the QoS required by the client, not on the amount of traffic, as in prior art.

## Claims

1. A method of protecting packet traffic against failures in an optical network comprising routers, optical fibers, and optical switches interconnecting routers and optical fibers, comprising the steps of:
assigning, at the IP layer of the Internet protocol, different quality-of-service classes for the packet traffic,
arranging different protection types for different optical links such that the different optical links are provided with different protection levels in accordance with the quality-of-service classes of the packet traffic transmitted over the optical links, wherein each optical link comprises at least two parallel optical fibers
routing at the transmitting router packets to the optical links in accordance with the quality-of-service classes of the packets, and
in response to a fiber failure, performing a protection scheme in accordance with the assigned quality-of-service class of the packet traffic that is affected by the fiber failure.

2. A method as in claim 1, wherein the optical fibers and the routers are coupled to form at least two bi-directional rings defining at least two different optical links between transmitting routers and corresponding receiving routers.

3. A method as in claim 1, comprising the further step of:
performing the protection scheme by changing the state of the optical switches both at the transmitting router end and at the corresponding receiving router end of the optical link.

4. A method as in claim 3, wherein the transmitting router routes packets to appropriate optical interfaces according to the priorities of the packets and continues the same routing during the period of fiber failure on any of the optical fibers of the optical links.

5. A method as in claim 1 or 3, wherein parameters defining quality of service are attached to each of the packets and the transmitting router routes packets to the appropriate optical interfaces according to said parameters.

6. A method as in claim 1, wherein one of said optical links is provided with 1:N protection comprising 1+N parallel optical fibers for traffic of N+1 priority classes between a transmitting router and a receiving router, wherein each optical fiber conveys packets of different priority classes;
switching, in response to a fiber failure on any of the 1+N optical fibers, packets of that fiber to the fiber conveying packets of the lowest priority, and dropping the packets of the lowest priority.

7. A method as claimed in any preceding claim, wherein each packet is assigned with one of the following quality-of-service classes: high priority, middle priority, and low priority.

8. A method as in claimed in claim 1, wherein a first one of said optical links is provided with 1+1 protection comprising two parallel optical fibers for traffic of high priority packets between a transmitting router and a receiving router, comprising the steps of transmitting packets of high priority via both of the optical fibers, wherein after a fiber failure occurs on either of the optical fibers the corresponding receiving router continues reception of the packets from the remaining optical fiber.

9. A method as claimed in claim 8, wherein a second one of said different optical links is provided with 1:1 protection comprising at least first and second parallel optical fibers for traffic of middle and low priority packets between a transmitting router and a receiving router, comprising the steps of
transmitting packets of middle priority via the first optical fiber,
transmitting packets of low priority via the second optical fiber, and
in response to a fiber failure on the first optical fiber, switching the packets of middle priority to the second optical fiber and switching the packets of low priority to the first optical fiber, whereupon at the receiving router reception of the middle priority packets continues after a short switching delay but the low priority packets are lost; and
in response to a fiber failure on the second optical fiber, reception of the middle priority packets at the receiving router continues as before without delay via the first optical fiber but the low priority packets are lost.

10. A router for an optical network comprising different optical links, each optical link comprising at least two parallel optical fibers, and **characterized in that** each optical link provided with different protection levels in the event of a fiber failure on one of the optical fibers thereof; wherein the router is arranged to route packets to the optical links in accordance with quality-of-service classes of the packets that are assigned at the IP layer of the internet protocol.

11. An optical network including a router as in claim 10, wherein the optical network is a WDM network, a SDH/SONET network or a MAN network.

12. A router as in claim 10, which is arranged to route packets to appropriate optical interfaces according to the priorities of the packets and continues the same routing during the period of fiber failure on any of the optical fibers.

13. A router as in claim 10, which is arranged to route packets to the appropriate optical interfaces according to parameters defining quality of service attached to each of the packets.

14. A router as in claim 10, wherein one of said optical links is provided with 1:N protection comprising 1+N parallel optical fibers for traffic of N+1 priority classes to a receiving router, wherein in response to a fiber failure on any of the 1+N optical fibers, packets of that fiber are switched to the fiber conveying packets of the lowest priority, and packets of the lowest priority are dropped.

15. A router as in claim 10, wherein a first one of said optical links is provided with 1+1 protection comprising two parallel optical fibers for traffic of high priority packets to a receiving router, wherein packets of high priority are transmitted over both of the optical fibers, such that when a fiber failure occurs on either of the optical fibers the receiving router continues reception of the packets from the remaining optical fiber.

16. A router as claimed in claim 15, wherein a second one of said different optical links is provided with 1:1 protection comprising at least first and second parallel optical fibers for traffic of middle and low priority packets to a receiving router, and wherein packets of middle priority are transmitted over the first optical fiber, and packets of low priority are transmitted over the second optical fiber, and in response to a fiber failure on the first optical fiber, the packets of middle priority are switched to the second optical fiber and the packets of low priority are switched to the first optical fiber, whereupon at the receiving router reception of the middle priority packets continues after a short switching delay but the low priority packets are lost; and
in response to a fiber failure on the second optical fiber, reception of the middle priority packets continues as before without delay via the first optical fiber but the low priority packets are lost.

## Patentansprüche

1. Verfahren zum Schützen von Paketverkehr gegen Störungen in einem optischen Netz, umfassend Router, optische Fasern und optische Schalter, die Router und optische Fasern miteinander verbinden, welches die Schritte umfasst:
Festlegen, in der IP-Schicht des Internetprotokolls, verschiedener Dienstgüteklassen für den Paketverkehr,
Einrichten verschiedener Schutztypen für verschiedene optische Verbindungen, so dass die verschiedenen optischen Verbindungen mit verschiedenen Schutzniveaus gemäß den Dienstgüteklassen des über die optischen Verbindungen gesendeten Paketverkehrs ausgestattet sind, wobei jede optische Verbindung wenigstens zwei parallele optische Fasern umfasst
Weiterleiten beim sendenden Router von Paketen an die optischen Verbindungen gemäß den Dienstgüteklassen der Pakete, und
in Reaktion auf eine Faserstörung, Durchführen eines Schutzmodells gemäß der festgelegten Dienstgüteklasse des Paketverkehrs, der von der Faserstörung betroffen ist.

2. Verfahren gemäß Anspruch 1, wobei die optischen Fasern und die Router gekoppelt sind, um wenigstens zwei bidirektionale Ringe zu bilden, die wenigstens zwei verschiedene optische Verbindungen zwischen sendenden Routern und entsprechenden empfangenden Routern festlegen.

3. Verfahren gemäß Anspruch 1, welches den weiteren Schritt umfasst: Durchführen des Schutzmodells durch Ändern des Zustands der optischen Schalter sowohl am sendenden Routerende als auch am entsprechenden empfangenden Routerende der optischen Verbindung.

4. Verfahren gemäß Anspruch 3, wobei der sendende Router Pakete an geeignete optische Schnittstellen gemäß den Prioritäten der Pakete weiterleitet und dasselbe Weiterleiten während der Zeitdauer einer Faserstörung auf einer der optischen Fasern der optischen Verbindungen fortsetzt.

5. Verfahren gemäß Anspruch 1 oder 3, wobei Dienstgüte festlegende Parameter jedem der Pakete beigefügt sind und der sendende Router Pakete an die geeigneten optischen Schnittstellen gemäß den Parametern weiterleitet.

6. Verfahren gemäß Anspruch 1, wobei eine der optischen Verbindungen mit 1:N-Schutz ausgestattet ist, welcher 1 +N parallele optische Fasern für Verkehr von N+1 Prioritätsklassen zwischen einem sendenden Router und einem empfangenden Router umfasst, wobei jede optische Faser Pakete von verschiedenen Prioritätsklassen übermittelt;
Schalten, in Reaktion auf eine Faserstörung auf einer der 1 +N optischen Fasern, von Paketen dieser Faser auf die Faser, die Pakete der niedrigsten Priorität übermittelt, und Fallenlassen der Pakete der niedrigsten Priorität.

7. Verfahren gemäß einem der vorhergehenden Ansprüche, wobei jedem Paket eine der folgenden Dienstgüteklassen zugewiesen ist: hohe Priorität, mittlere Priorität und niedriger Priorität.

8. Verfahren gemäß Anspruch 1, wobei eine erste der optischen Verbindungen mit 1+1-Schutz ausgestattet ist, der zwei parallele optische Fasern für Verkehr von Paketen von hoher Priorität zwischen einem sendenden Router und einem empfangenden Router umfasst, welches die Schritte umfasst Senden von Paketen von hoher Priorität über beide der optischen Fasern, wobei, nachdem eine Faserstörung auf einer der optischen Fasern auftritt, der entsprechende empfangende Router einen Empfang der Pakete von der übrigen optischen Faser fortsetzt.

9. Verfahren gemäß Anspruch 8, wobei eine zweite der verschiedenen optischen Verbindungen mit 1:1-Schutz ausgestattet ist, welcher wenigstens eine erste und zweite parallele optische Faser für Verkehr von Paketen von mittlerer und niedriger Priorität zwischen einem sendenden Router und einem empfangenden Router umfasst, welches die Schritte umfasst:
Senden von Paketen von mittlerer Priorität über die erste optische Faser,
Senden von Paketen von niedriger Priorität über die zweite optische Faser, und
in Reaktion auf eine Faserstörung auf der ersten optischen Faser, Schalten der Pakete von mittlerer Priorität auf die zweite optische Faser und Schalten der Pakete von niedriger Priorität auf die erste optische Faser, woraufhin beim empfangenden Router ein Empfang der Pakete von mittlerer Priorität nach einer kurzen Schaltverzögerung weitergeht, aber die Pakete von niedriger Priorität verloren werden; und
in Reaktion auf eine Faserstörung auf der zweiten optischen Faser geht ein Empfang der Pakete von mittlerer Priorität beim empfangenden Router wie zuvor ohne Verzögerung über die erste optische Faser weiter, aber die Pakete von niedriger Priorität werden verloren.

10. Router für ein optisches Netz, welches verschiedene optische Verbindungen umfasst, wobei jede optische Verbindung wenigstens zwei parallele optische Fasern umfasst, und **dadurch gekennzeichnet ist, dass** jede optische Verbindung im Falle einer Faserstörung auf einer ihrer optischen Fasern mit verschiedenen Schutzniveaus ausgestattet ist; wobei der Router eingerichtet ist, um Pakete an die optischen Verbindungen gemäß der Dienstgüteklassen der Pakete weiterzuleiten, die in der IP-Schicht des Internetprotokolls festgelegt sind.

11. Optisches Netz, welches einen Router gemäß Anspruch 10 umfasst, wobei das optische Netz ein WDM-Netz, ein SDH/SONET-Netz oder ein MAN-Netz ist.

12. Router gemäß Anspruch 10, welcher eingerichtet ist, Pakete an geeignete optische Schnittstellen gemäß den Prioritäten der Pakete weiterzuleiten und dasselbe Weiterleiten während der Zeitdauer einer Faserstörung auf einer der optischen Fasern fortsetzt.

13. Router gemäß Anspruch 10, welcher eingerichtet ist, Pakete an die geeigneten optischen Schnittstellen gemäß Dienstgüte festlegenden Parametern, die jedem der Pakete beigefügt sind, weiterzuleiten.

14. Router gemäß Anspruch 10, wobei eine der optischen Verbindungen mit 1:N-Schutz ausgestattet ist, welcher 1+N parallele optische Fasern für Verkehr von N+1 Prioritätsklassen zu einem empfangenden Router umfasst, wobei in Reaktion auf eine Faserstörung auf einer der 1+N optischen Fasern Pakete dieser Faser auf die Faser geschaltet werden, die Pakete der niedrigsten Priorität übermittelt, und Pakete der niedrigsten Priorität fallengelassen werden.

15. Router gemäß Anspruch 10, wobei eine erste der optischen Verbindungen mit 1+1-Schutz ausgestattet ist, welcher zwei parallele optische Fasern für Verkehr von Paketen von hoher Priorität zu einem empfangenden Router umfasst, wobei Pakete von hoher Priorität über beide der optischen Fasern gesendet werden, so dass, wenn eine Faserstörung auf einer der optischen Fasern auftritt, der empfangende Router einen Empfang der Pakete von der übrigen optischen Faser fortsetzt.

16. Router gemäß Anspruch 15, wobei eine zweite der verschiedenen optischen Verbindungen mit 1:1-Schutz ausgestattet ist, welcher wenigstens eine erste und zweite parallele optische Faser für Verkehr von Paketen von mittlerer und niedriger Priorität an einen empfangenden Router umfasst, und wobei Pakete von mittlerer Priorität über die erste optische Faser gesendet werden und Pakete von niedriger Priorität über die zweite optische Faser gesendet werden, und in Reaktion auf eine Faserstörung auf der ersten optischen Faser die Pakete von mittlerer Priorität auf die zweite optische Faser geschaltet werden und die Pakete von niedriger Priorität auf die erste optische Faser geschaltet werden, woraufhin beim empfangenden Router ein Empfang der Pakete von mittlerer Priorität nach einer kurzen Schaltverzögerung weitergeht, aber die Pakete von niedriger Priorität verloren werden; und
in Reaktion auf eine Faserstörung auf der zweiten optischen Faser geht ein Empfang der Pakete von mittlerer Priorität wie zuvor ohne Verzögerung über die erste optische Faser weiter, aber die Pakete von niedriger Priorität werden verloren.

## Revendications

1. Procédé pour protégé un trafic de paquets contre des défaillances dans un réseau optique comportant des routeurs, des fibres optiques, et des commutateurs optiques interconnectant des routeurs et des fibres optiques, comportant les étapes ci-dessous consistant à :
affecter, au niveau de la couche IP du protocole Internet, différentes classes de qualité de service pour le trafic de paquets,
agencer différents types de protection pour différentes liaisons optiques de sorte que les différentes liaisons optiques reçoivent différents niveaux de protection selon les classes de qualité de service du trafic de paquets transmis sur les liaisons optiques, dans lequel chaque liaison optique comporte au moins deux fibres optiques parallèles
router, au niveau du routeur de transmission, des paquets aux liaisons optiques selon les classes de qualité de service des paquets, et
en réponse à une défaillance de fibre, mettre en oeuvre un schéma de protection selon la classe de qualité de service attribuée du trafic de paquets qui est affecté par la défaillance de fibre.

2. Procédé selon la revendication 1, dans lequel les fibres optiques et les routeurs sont couplés pour former au moins deux anneaux bidirectionnels définissant au moins deux liaisons optiques différentes entre des routeurs de transmission et des routeurs de réception correspondants.

3. Procédé selon la revendication 1, comportant en outre l'étape consistant à :
mettre en oeuvre le schéma de protection en modifiant l'état des commutateurs optiques à l'extrémité de routeur de transmission et à l'extrémité de routeur de réception correspondant de la liaison optique.

4. Procédé selon la revendication 3, dans lequel le routeur de transmission achemine des paquets à des interfaces optiques appropriées selon les priorités des paquets et continue le même routage au cours de la période de défaillance de fibre sur une quelconque des fibres optiques des liaisons optiques.

5. Procédé selon la revendication 1 ou 3, dans lequel des paramètres définissant une qualité de service sont attachés à chacun des paquets et le routeur de transmission achemine des paquets aux interfaces optiques appropriées selon lesdits paramètres.

6. Procédé selon la revendication 1, dans lequel l'une desdites liaisons optiques reçoit une protection 1 : N comportant 1 + N fibres optiques parallèles pour le trafic de N +1 classes de priorité entre un routeur de transmission et un routeur de réception, où chaque fibre optique transmet des paquets de différentes classes de priorité ;
comportant en outre les étapes consistant à :
commuter, en réponse à une défaillance de fibre sur l'une quelconque des 1 + N fibres optiques, des paquets de cette fibre à la fibre transmettant des paquets de la priorité la plus basse, et abandonner les paquets de la priorité la plus faible.

7. Procédé selon l'une quelconque des revendications précédentes, dans lequel chaque paquet reçoit l'une des classes de qualité de service ci-après : une priorité élevée, une priorité moyenne, et une priorité faible.

8. Procédé selon la revendication 1, dans lequel une première desdites liaisons optiques reçoit une protection 1 +1 comportant deux fibres optiques parallèles pour un trafic de paquets de priorité élevée entre un routeur de transmission et un routeur de réception, comportant les étapes consistant à transmettre des paquets de priorité élevée via les deux fibres optiques, dans lequel, suite à une défaillance de fibre sur l'une ou l'autre des fibres optiques, le routeur de réception correspondant continue la réception des paquets en provenance de la fibre optique restante.

9. Procédé selon la revendication 8, dans lequel une seconde desdites différentes liaisons optiques reçoit une protection 1 : 1 comportant au moins des première et seconde fibres optiques parallèles pour le trafic de paquets de priorités moyenne et faible entre un routeur de transmission et un routeur de réception, comportant les étapes consistant à
transmettre des paquets de priorité moyenne via la première fibre optique,
transmettre des paquets de priorité faible via la seconde fibre optique, et
en réponse à une défaillance de fibre sur la première fibre optique, commuter les paquets de priorité moyenne vers la seconde fibre optique et commuter les paquets de priorité faible vers la première fibre optique, après quoi, au niveau du routeur de réception, la réception des paquets de priorité moyenne continue après un court retard de commutation mais les paquets de priorité faible sont perdus ; et
en réponse à une défaillance de fibre sur la seconde fibre optique, la réception des paquets de priorité moyenne au niveau du routeur de réception continue comme avant sans retard via la première fibre optique, mais les paquets de priorité faible sont perdus.

10. Routeur destiné à un réseau optique comportant différentes liaisons optiques, chaque liaison optique comportant au moins deux fibres optiques parallèles et **caractérisé en ce que** chaque liaison optique reçoit différents niveaux de protection en cas de défaillance de fibre sur l'une des fibres optiques de cela ; dans lequel le routeur est agencé pour acheminer des paquets aux liaisons optiques selon des classes de qualité de service des paquets qui sont attribuées au niveau de la couche IP du protocole Internet.

11. Réseau optique comportant un routeur selon la revendication 10, dans lequel le réseau optique est un réseau WDM, un réseau SDH/SONET ou un réseau MAN.

12. Routeur selon la revendication 10, lequel est agencé pour acheminer des paquets à des interfaces optiques appropriées selon les priorités des paquets et continue le même routage au cours de la période de défaillance de fibre sur une quelconque des fibres optiques.

13. Routeur selon la revendication 10, lequel est agencé pour acheminer des paquets aux interfaces optiques appropriées selon des paramètres définissant une qualité de services attachée à chacun des paquets.

14. Routeur selon la revendication 10, dans lequel l'une desdites liaisons optiques reçoit une protection 1 : N comportant 1 + N fibres optiques parallèles pour le trafic de N + 1 classes de priorité à un routeur de réception, où en réponse à une défaillance de fibre sur l'une quelconque des 1 + N fibres optiques, les paquets de cette fibre sont commutés à la fibre acheminant des paquets de la priorité la plus basse, et des paquets de la priorité la plus basse sont abandonnés.

15. Routeur selon la revendication 10, dans lequel une première desdites liaisons optiques reçoit une protection 1 + 1 comportant deux fibres optiques parallèles pour le trafic de paquets de priorité élevée à un routeur de réception, dans lequel les paquets de priorité élevée sont transmis sur les deux fibres optiques, de sorte que lorsqu'une défaillance de fibre est rencontrée sur l'une ou l'autre des fibres optiques, le routeur de réception continue la réception des paquets en provenance de la fibre optique restante.

16. Routeur selon la revendication 15, dans lequel une seconde desdites différentes liaisons optiques reçoit une protection 1 : 1 comportant au moins des première et seconde fibres optiques parallèles pour le trafic de paquets de priorités moyenne et faible vers un routeur de réception, et dans lequel des paquets de priorité moyenne sont transmis sur la première fibre optique, et des paquets de priorité faible sont transmis sur la seconde fibre optique, et en réponse à une défaillance de fibre sur la première fibre optique, les paquets de priorité moyenne sont commutés vers la seconde fibre optique et les paquets de priorité faible sont commutés vers la première fibre optique, après quoi, au niveau du routeur de réception, la réception des paquets de priorité moyenne continue après un court retard de commutation mais les paquets de priorité faible sont perdus ; et
en réponse à une défaillance de fibre sur la seconde fibre optique, la réception des paquets de priorité moyenne continue comme avant sans retard via la première fibre optique, mais les paquets de priorité faible sont perdus.
